Europäisches Patentamt

(19) European Patent Office

Office européen des brevets

(11) Publication number: **0 214 301 B1**

# EUROPEAN PATENT SPECIFICATION

(45) Date of publication of patent specification:
25.09.91 Bulletin 91/39

(51) Int. Cl.⁵: **H02P 5/408**

(21) Application number: 86901496.9

(22) Date of filing: 20.02.86

(86) International application number:
**PCT/JP86/00079**

(87) International publication number:
**WO 86/05043 28.08.86 Gazette 86/19**

(54) SYSTEM FOR CONTROLLING TORQUE OF INDUCTION MOTOR.

(30) Priority: 25.02.85 JP 36051/85

(43) Date of publication of application:
18.03.87 Bulletin 87/12

(45) Publication of the grant of the patent:
25.09.91 Bulletin 91/39

(84) Designated Contracting States:
**DE FR GB**

(56) References cited:
**No relevant documents have been disclosed.**

(73) Proprietor: FANUC LTD.
3580, Shibokusa Aza-Komanba, Oshino-mura
Minamitsuru-gun, Yamanashi 401-05 (JP)

(72) Inventor: FUJIOKA, Yoshiki
Greentown 3-30 1293-10, Tatsuno 3-chome
Higashiyamato-shi Tokyo 189 (JP)
Inventor: KOUNO, Shinichi
Room 202, Wada-sou 6-21, Osakaue 4-chome
Hino-shi Tokyo 191 (JP)

(74) Representative: Billington, Lawrence Emlyn et al
HASELTINE LAKE & CO Hazlitt House 28
Southampton Buildings Chancery Lane
London WC2A 1AT (GB)

## Description

<u>Technical Field</u>

This invention relates to a system for controlling the torque of an induction motor.

<u>Background Art</u>

Vector control generally is employed for controlling the velocity of recent induction motors. When controlling the velocity of an induction motor in accordance with such vector control, a torque command, excitation current, secondary current and slip frequency become non-linear owing to such effects as the secondary leakage impedence and core loss of the motor in cases where velocity control is performed up to a region of high rotational velocity as in the spindle motor of a machine tool or the like, or in cases where control is performed to weaken excitation in accordance with the torque command at a constant rpm. As a result, the output torque also becomes non-linear with respect to the torque command and an accurate torque command cannot be produced (see for example EP-A-75023).

A conventional approach for dealing with this is to use external equipment such as a torque sensor to measure motor torque as means for accurately ascertaining the output torque of the motor, A problem that results is the high cost of equipment.

<u>Disclosure of the Invention</u>

The present invention solves the aforementioned problem of the prior art and its object is to provide an induction motor torque control system in which output torque is linearly controlled in response to a torque command without requiring special torque measurement equipment.

A system for controlling the torque of an induction motor according to the present invention is characterized by comprising means for deciding a torque command for an induction motor and an excitation flux command from an excitation frequency, means for deciding an excitation flux component of excitation current from the excitation flux, means for deciding a component, in the direction of an electromotive force, of the excitation current from the excitation flux and excitation frequency, means for deciding a component, in the direction of the electromotive force, of a secondary current of the motor from the torque command and excitation flux command, means for deciding a slip frequency from the component, in the direction of the electromotive force, of the secondary current and the excitation flux command, means for deciding an excitation flux component of the secondary current from the component, in the direction of the electromotive force, of the secondary current and from the slip frequency, and means for obtaining an excitation flux component, as well as a component in the direction of the electromotive force, of the primary current of the motor from the excitation flux component and from component in the direction of the electromotive force of the excitation current and secondary current, respectively, and for limiting a primary current command for the motor upon combining these components.

Accordingly, by obtaining a slip frequency command which will cause the required load current to flow, the present invention enables the torque command itself to be substituted for the output torque in order to linearly control the motor torque, this being performed without requiring special torque measurement equipment.

<u>Brief Description of the Drawings</u>

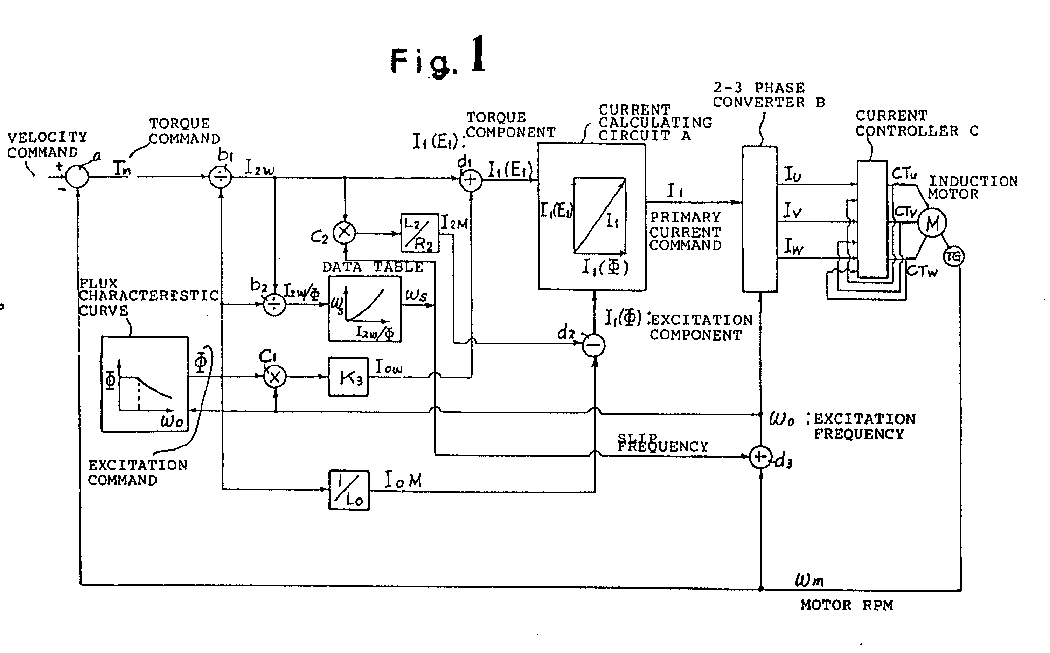

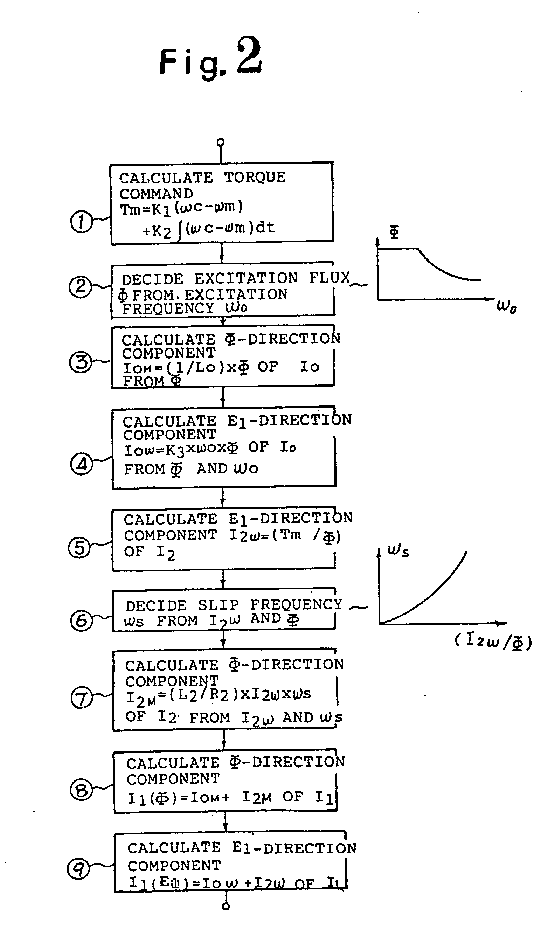

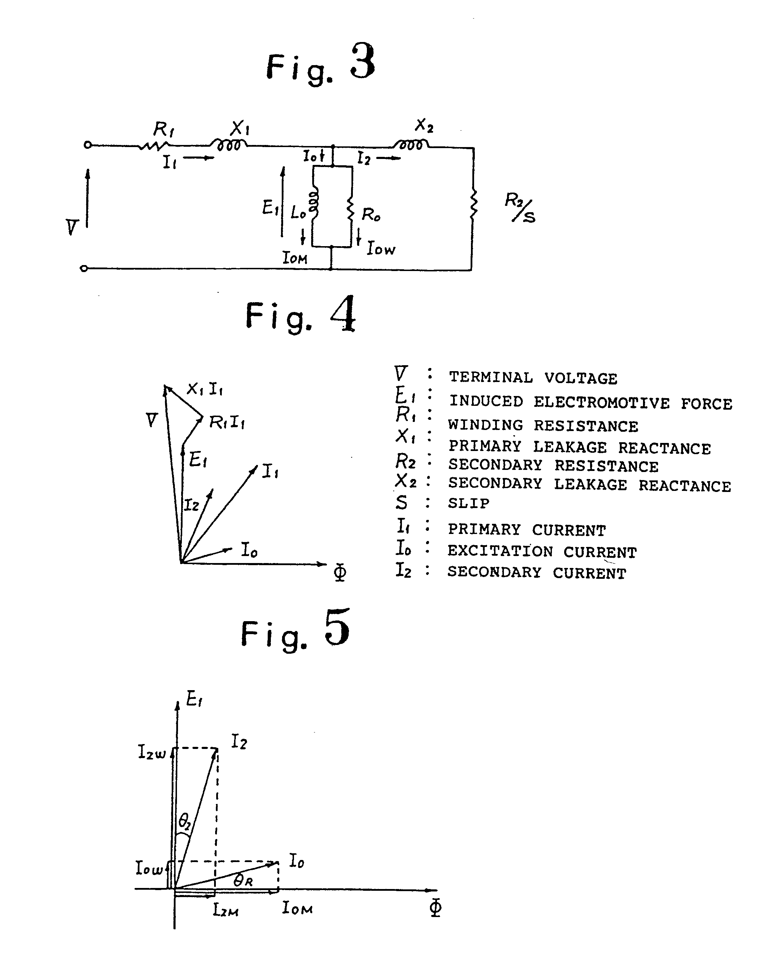

Fig. 1 is a block diagram illustrating an embodiment of the present invention, Fig. 2 is a flowchart illustrating a torque control operation, Fig. 3 is a view illustrating an equivalent circuit of an induction motor, and Figs. 4 and 5 are vector diagrams.

<u>Best Mode for Carrying Out the Invention</u>

An embodiment of the present invention will now be described in detail with reference to the drawings.

First, the relationship among various characteristics of an induction motor, upon which characteristics the present invention is premised, will be described with reference to the equivalent circuit of Fig. 3 and the vector diagrams of Figs. 4 and 5.

A secondary input $P_2$ of an induction motor is found in accordance with

$$P_2 = E_1 \times I_1 \times \cos\theta_2 \quad (1)$$

Letting $\phi$ represent excitation flux and letting $\omega_o$ denote the excitation frequency, an induced electromotive force $E_1$ is expressed by

$$E_1 = d\phi/dt = \omega_o \times \phi \quad (2)$$

The secondary current is expressed by

$$I_2 = E_1/|Z_2|$$

$$= E_1/\sqrt{(R_2/S)^2 + X_2^2} \qquad \ldots (3)$$

The power factor is obtained from

$$\cos\theta = (R_2/S)/|Z|$$

$$= (R_2/S)/\sqrt{(R_2/S)^2 + X_2^2} \qquad \ldots (4)$$

Substituting Eqs. (2), (3), (4) into Eq. (1) gives us

$$P_2 = E_1^2 (R_2/S)/[(R_2/S)^2 + X_2^2]$$

$$= I_2^2 (R_2/S) \qquad \ldots (5)$$

Secondary core loss $P_2r$ is obtained from

$$P_2r = I_2^2 R_2 = S \times P_2 \quad (6)$$

The output $P_m$ of the motor is expressed by

$$P_m = P_2 - P_2r = (1-S)P_2 \quad (7)$$

Letting $T_m$ represent the motor torque and $\omega_m$ the rotational speed of the motor, we have

$$Pm = \omega_m \times T_m \quad (8)$$

The torque $T_m$ of the motor can be written as follows using Eqs. (1), (2), (7) and (8):

$$T_m = P_m/\omega_m$$

$$= (1-S)P_2/\omega_m$$

$$= (1/\omega_m) \times [1-(\omega_s/\omega_o)] \times P_2$$

$$= P_2/\omega_o$$

$$= (1/\omega_o) \times E_1 \times I_2 \times \cos\theta_2$$

$$= \phi \times I_2 \times \cos\theta_2 \qquad \ldots (9)$$

Note that $\omega_s$ represents the slip frequency.

Next, the $\phi$-axis component (excitation flux component) and $E_1$-axis component (component in the direction of the electromotive force) of $I_o$ and $I_2$ are obtained as $I_{oM}$, $I_{o\omega}$, and $I_{2M}$, $I_{2\omega}$ respectively, as follows: Letting $L_o$ represent the excitation impedence, we have

$$\phi = L_o \times I_{oM}$$

so that

$$I_{oM} = (1/L_o) \times \phi \quad (10)$$

EP 0 214 301 B1

$I_{o\omega}$ is the core loss component, and we let K represent a constant of proportion. This gives us

$$I_{o\omega} = K \times \omega_o \times \phi \quad (11)$$

as an approximation.

Further, transforming Eq. (9) gives us

$$I_{2\omega} = I_2 \times \cos\theta_2 = T_m/\phi \quad (12)$$

The $\phi$-axis component $I_{2M}$ of the secondary current is obtained as follows:

$$
\begin{aligned}
I_{2M} = I_2 \times \sin\theta_2 &= I_2\omega \times \tan\theta_2 \\
&= I_2\omega \times [X_2/(R_2/S)] \\
&= I_2\omega \times (SX_2/(R_2) \\
&= I_2\omega \times \omega_s \times (L_2/R_2) \qquad \ldots \quad (13)
\end{aligned}
$$

We obtain $I_{2\omega}$ from Eqs. (2), (3), (4), (12) as follows:

$$
\begin{aligned}
I_{2\omega} &= 12 \times \cos\theta_2 \\
&= [(E_1 \times (R_2/S)]/[(R_2/S)^2 + X2^2] \\
&= \omega_o \times \phi \times (R_2/S)/[(R_2/S)^2 + X_2^2] \\
&= [\phi \times (\omega_o \times S \times R_2)]/[R_2^2 + (SX_2)^2] \\
&= (\phi \times \omega_s \times R_2)/[R_2^2 + (\omega_s \times L_2)^2]
\end{aligned}
$$

where $X_2 = \omega_o \times L_2$

$$\omega_s = S \times \omega_o$$

Dividing both sides by $\phi$ gives us

$$I_{2\omega}/\phi = (\omega_s \times R_2)/[(R_2^2 + (\omega_s L_2)^2] \quad (14)$$

With the foregoing serving as a premise, we will now describe a specific method, in accordance with the invention, of obtaining the primary current and slip frequency conforming to a torque command.

In general, the maximum value of excitation torque $\phi$ is decided by [1] the maximum excitation current capable of flowing in the motor, or [2] the maximum voltage capable of being impressed upon the motor. In actual control of a motor, there are cases where excitation is weakened when the load is small in order to reduce excitation noise. In the following explanation, however, it will be assumed that the flux command gives the maximum value.

When the torque command $T_m$ and flux command $\phi$ are applied, $I_{oM}$ is found from Eq. (10), $I_o\omega$ from Eq. (11), and $I_{2\omega}$ from Eq. (12).

Next, the slip frequency $\omega_s$ is decided in accordance with Eq. (14) using $I_{2\omega}$ and $\phi$. However, since it is difficult to calculate $\omega_s$ by a CPU or the like in a short period of time, values of $\omega_s$ are found in advance with respect to values of $I_{2\omega}/\phi$, $\omega_s$ is stored in memory as a data table, and the value of $I_{2\omega}/\phi$ is stored in memory as a data address.

Thus, if $I_{2\omega}$ and $\omega_s$ are found, $I_{2M}$ can be obtained from Eq. (13).

From the foregoing, the $\phi$-axis component $I_1(\phi)$ of the primary current $I_1$ can be obtained from:

$$I_1(\phi) = I_{oM} + I_{2M} \quad (15)$$

and the $E_1$-axis component $I_1(E_1)$ of the primary current $I_1$ can be obtained from:

$$I_1(E_1) = I_o\omega + I_{2\omega} \quad (16)$$

The primary current thus obtained is a current command, which takes all characteristics of the induction motor into account, for obtaining a linear output torque with respect to a torque command.

Further, $I_1(\phi)$, $I_1(E_1)$ correspond to an excitation current component and load current component, respectively, in vector control of the induction motor.

The specifics of the present invention will now be described with reference to the block diagram of Fig. 1 and flowchart of Fig. 2.

①A velocity command $\omega_c$ and the induction motor rotational speed $\omega_m$, which is obtained by a tacho-generator TG coupled to the output shaft of the motor M, are applied to a comparator a, and the torque command $T_m$ is calculated by performing the arithmetic operation

$$T_m = K_1(\omega_c - \omega_m) + K_2\int(\omega_c - \omega_m)dt$$

In vector control, a calculation method in which a calculation is performed as indicated by the above equation using a velocity deviation and the result of the calculation is regarded as a torque command is commonly known; hence, a description of the foregoing is omitted.

②Excitation flux $\Phi$ on a flux characteristic curve is decided from the excitation frequency $\omega_o$.

4

③ The $\phi$-direction component $I_o$ of excitation current $I_o$ is obtained from the excitation flux $\phi$ in the form

$$I_{oM} = (1/L_o) \times \phi$$

This is applied to an adder $d_2$.

④ The $E_1$-direction component of $I_o$ is obtained from $\phi$ and $\omega_o$ in the form

$$I_o\omega = K_3 \times \omega_o \times \phi$$

⑤ The $E_1$-direction component of the secondary current $I_2$ is obtained in the form

$$I_2\omega = (T_m/\phi)$$

by the divider $b_1$.

⑥ Using the $I_2\omega$ and excitation flux command $\phi$ that have been obtained, the divider b2 divides $I_2\omega$ by $\phi$. Then, a slip frequency $\omega_s$ corresponding to the data address $I_2\omega/\phi$, which is the result of the calculation, is obtained from a data table stored in memory beforehand.

⑦ $I_2 \omega$ and $\omega_s$ are applied to a multiplier $c_2$, and the product is multiplied by $(L_2/R_2)$. The $\phi$-direction component of the secondary current is obtained in the form

$$I_{2M} = (L_2/R_2) \times I_2\omega \times \omega_s$$

This is applied to the adder $d_2$.

⑧ The $\phi$-direction component of $I_1$ is obtained in the form

$$I_1 (\phi) = I_{oM} + I_{2M}$$

by the adder $d_2$.

⑨ The $E_1$-direction component of $I_1$ is obtained in the form

$$I_1(E_1) = I_o\omega + I_2\omega$$

by an adder $d_1$. ⑩ Two orthogonal phases of the primary current command $I_1$ are obtained from a current calculating circuit A and applied to a two-phase/three-phase converting circuit B. ⑪ Command currents lu, lv, lw in the respective phases of the induction motor M obtained from the two-phase/three-phase converting circuit B are applied to a current controller C. The actual currents of the respective phases of the induction motor are sensed by CTu, CTv, CTw and compared with the command currents, upon which predetermined control is performed by the current controller C.

## Industrial Applicability

In accordance with the system for controlling the torque of an induction motor of the present invention, control is performed in such a manner that a linear output torque is obtained with respect to a torque command. This enables the output torque of the induction motor to be accurately judged at low cost.

## Claims

1. An induction motor torque control system for linearly controlling the output torque of an induction motor in response to a torque command, comprising:

means for deciding a torque command (Tm) for the induction motor, and an excitation flux command ($\Phi$) from an excitation frequency ($\omega$o);

means for deciding an excitation flux component ($I_{oM}$) of excitation current from the excitation flux;

means for deciding a component ($I_o$), in the direction of an electromotive force ($E_1$), of the excitation current from the excitation flux and excitation frequency;

means for deciding a component ($I_{2W}$), in the direction of the electromotive force ($E_1$), of a secondary current ($I_2$) of the motor from said torque command and excitation flux command;

means for deciding a slip frequency ($\omega_s$) from the component, in the direction of the electromotive force, of said secondary current and the excitation flux command;

means for deciding an excitation flux component ($I_{2M}$) of the secondary current from the component ($I_{2W}$), in the direction of the electromotive force, of the secondary current and from the slip frequency ($\omega_s$); and

means for obtaining an excitation flux component $I_1$ ($\Phi$) of the primary current of the motor and a component $I_1(E_1)$ in the direction of the electromotive force of the primary current ($I_1$) of the motor from the excitation flux component and from the component in the direction of the electromotive force of said excitation current and secondary current, respectively, and for limiting a primary current command for the motor upon combining these components.

2. An induction motor torque control system according to claim 1, wherein said slip frequency deciding means decides the slip frequency ($\omega_s$) from a data table in which the data address is a value obtained by dividing the component ($I_{2W}$), in the direction of the electromotive force, of the secondary current by the excitation flux command ($\omega_o$).

## Patentansprüche

1.Regelsystem für das Moment eines Induktionsmotors zum linearen Regeln des Ausgangsdrehmoments des Induktionsmotors in Reaktion auf einen Drehmomentbefehl, welches Regelsystem umfaßt:

ein Mittel zum Bestimmen eines Drehmomentbefehls ($T_m$) für den Induktionsmotor und eines Erregungsflußbefehls ($\Phi$) aus einer Erregungsfrequenz ($\omega_0$),

ein Mittel zum Bestimmen einer Erregungsflußkomponente ($I_{oM}$) des Erregungsstroms aus dem Erregungsfluß,

ein Mittel zum Bestimmen einer Komponente ($I_o$) in der Richtung einer elektromotorischen Kraft ($E_1$) des Erregungsstroms aus dem Erregungsfluß und der Erregungsfrequenz,

ein Mittel zum Bestimmen einer Komponente ($I_{2w}$) in der Richtung der elektromotorischen Kraft ($E_1$) eines Sekundärstroms ($I_2$) des Motors aus dem Drehmomentbefehl und dem Erregungsflußbefehl,

ein Mittel zum Bestimmen einer Schlupffrequenz ($\omega_s$) aus der Komponente in der Richtung der elektromotorischen Kraft des Sekundärstroms und des Erregungsflußbefehls,

ein Mittel zum Bestimmen einer Erregungsflußkomponente ($I_{2M}$) des Sekundärstroms aus der Komponente ($I_{2w}$) in der Richtung der elektromotorischen Kraft des Sekundärstroms und aus der Schlupffrequenz ($\omega_s$) und

ein Mittel zum Gewinnen einer Erregungsflußkomponente $I_1(\Phi)$ des Primärstroms des Motors und einer Komponente $I_1(E_1)$ in der Richtung der elektromotorischen Kraft des Primärstroms ($I_1$) des Motors aus der Erregungsflußkomponente und aus der Komponente in der Richtung der elektromotorischen Kraft des Erregungsstroms bzw. des Sekundärstroms und zum Begrenzen eines Primärstrombefehls für den Motor auf die Kombination dieser Komponenten hin.

2. Regelsystem für das Moment eines Induktionsmotors nach Anspruch 1, bei dem das Schlupffrequenz-Bestimmungsmittel die Schlupffrequenz ($\omega_s$) aus einer Datentabelle bestimmt, in welcher die Datenadresse ein Wert ist, der durch Dividieren der Komponente ($I_{2w}$) in der Richtung der elektromotorischen Kraft des Sekundärstroms durch den Erregungsflußbefehl ($\omega_0$) gewonnen wird.

## Revendications

1. Système de régulation du couple d'un moteur à induction pour réguler linéairement le couple de sortie d'un moteur à induction en réponse à une commande de couple, comprenant:

des moyens pour déterminer une commande de couple ($T_m$) pour le moteur à induction et une commande de flux d'excitation ($\Phi$) à partir d'une fréquence d'excitation ($\omega_o$),

des moyens pour déterminer une composante de flux ($I_{om}$) du courant d'excitation à partir du flux d'excitation,

des moyens pour déterminer une composante ($I_o$), dans la direction de la force électromotrice ($E_1$), du courant d'excitation à partir du flux d'excitation et de la fréquence d'excitation,

des moyens pour déterminer une composante ($I_{2\omega}$), dans la direction de la force électromotrice ($E_1$), d'un courant secondaire ($I_2$) du moteur à partir de la commande de couple et de la commande de flux d'excitation,

des moyens pour déterminer une fréquence de glissement ($\omega_s$) à partir de la composante, dans la direction de la force électromotrice, du courant secondaire et de la commande de flux d'excitation,

des moyens pour déterminer une composante de flux d'excitation ($I_{2\omega}$) du courant secondaire à partir de la composante ($I_{2\omega}$), dans la direction de la force électromotrice du courant secondaire et de la fréquence de glissement ($\omega_s$),

et des moyens pour obtenir une composante de flux d'excitation $I_1(\Phi)$ ainsi qu'une composante $I_1(E_1)$, dans la direction de la force électromotrice, du courant primaire ($I_1$) du moteur à partir de la composante du flux d'excitation et de la composante, dans la direction de la force électromotrice, du courant d'excitation et du courant secondaire, respectivement, et pour limiter une commande de courant primaire pour le moteur après combinaison de ces composantes.

2. Système de régulation du couple d'un moteur à induction selon la revendication 1, dans lequel lesdits moyens pour déterminer la fréquence de glissement déterminent cette fréquence de glissement ($\omega_s$) à partir

d'une table de données dans laquelle l'adresse de donnée est une valeur obtenue en divisant la composante ($I_2\omega$), dans la direction de la force électromotrice, du courant secondaire par la commande de flux d'excitation ($\omega_o$).

# Fig. 1

2-3 PHASE CONVERTER B

CURRENT CALCULATING CIRCUIT A

CURRENT CONTROLLER C

VELOCITY COMMAND

TORQUE COMMAND

TORQUE COMPONENT

$I_1(E_1)$:

$I_n$

$I_{2w}$

$I_1(E_1)$

$I_1$

$I_U$

$I_V$

$I_W$

PRIMARY CURRENT COMMAND

INDUCTION MOTOR

$CT_U$

$CT_V$

$CT_W$

M

TG

$a$ $b_1$ $d_1$

$C_2$

$\dfrac{L_2}{R_2}$ $I_{2M}$

DATA TABLE

FLUX CHARACTERISTIC CURVE

$b_2$ $I_{2w}/\Phi$

$\omega_s$ $\omega_S$

$I_{2w}/\Phi$

$\Phi$

$C_1$

$K_3$ $I_{ow}$

$\Phi$

$\omega_0$

EXCITATION COMMAND

$d_2$

$I_1(\Phi)$:EXCITATION COMPONENT

$\omega_0$:EXCITATION FREQUENCY

SLIP FREQUENCY

$d_3$

$\dfrac{I}{L_0}$ $I_oM$

$\omega_m$

MOTOR RPM

EP 0 214 301 B1

8

# Fig. 2

**①** CALCULATE TORQUE
COMMAND
$Tm=K_1(\omega c-\omega m)$
$+K_2\int(\omega c-\omega m)dt$

**②** DECIDE EXCITATION FLUX
$\Phi$ FROM EXCITATION
FREQUENCY $\omega_o$

**③** CALCULATE $\Phi$-DIRECTION
COMPONENT
$I_{o\mu}=(1/L_o)\times\Phi$ OF $I_o$
FROM $\Phi$

**④** CALCULATE $E_1$-DIRECTION
COMPONENT
$I_{o\omega}=K_3\times\omega_o\times\Phi$ OF $I_o$
FROM $\Phi$ AND $\omega_o$

**⑤** CALCULATE $E_1$-DIRECTION
COMPONENT $I_{2\omega}=(Tm/\Phi)$
OF $I_2$

**⑥** DECIDE SLIP FREQUENCY
$\omega_s$ FROM $I_{2\omega}$ AND $\Phi$

**⑦** CALCULATE $\Phi$-DIRECTION
COMPONENT
$I_{2\mu}=(L_2/R_2)\times I_{2\omega}\times\omega_s$
OF $I_2$ FROM $I_{2\omega}$ AND $\omega_s$

**⑧** CALCULATE $\Phi$-DIRECTION
COMPONENT
$I_1(\Phi)=I_{o\mu}+I_{2M}$ OF $I_1$

**⑨** CALCULATE $E_1$-DIRECTION
COMPONENT
$I_1(E_1)=I_{o\omega}+I_{2\omega}$ OF $I_1$

# Fig. 3

# Fig. 4

$V$ : TERMINAL VOLTAGE
$E_1$ : INDUCED ELECTROMOTIVE FORCE
$R_1$ : WINDING RESISTANCE
$X_1$ : PRIMARY LEAKAGE REACTANCE
$R_2$ : SECONDARY RESISTANCE
$X_2$ : SECONDARY LEAKAGE REACTANCE
$S$ : SLIP
$I_1$ : PRIMARY CURRENT
$I_0$ : EXCITATION CURRENT
$I_2$ : SECONDARY CURRENT

# Fig. 5